Europäisches Patentamt

European Patent Office

Office européen des brevets

(11) Publication number: **0 237 334**
**A2**

(12) # EUROPEAN PATENT APPLICATION

(21) Application number: **87302076.2**

(22) Date of filing: **11.03.87**

(51) Int. Cl.³: **C 04 B 33/34**
**F 27 B 9/24, F 27 B 9/36**
**F 27 D 7/06, F 27 D 13/00**

(30) Priority: **12.03.86 GB 8606049**

(43) Date of publication of application:
**16.09.87 Bulletin 87/38**

(84) Designated Contracting States:
**DE ES FR IT**

(71) Applicant: **H & R Johnson Tiles Limited**
**P.O. Box No 1**
**Tunstall Stoke-on-Trent(GB)**

(72) Inventor: **Lawton, Samuel John**
**c/o H & R Johnson Tiles Limited P.O. Box No. 1**
**Tunstall Stoke-on-Trent(GB)**

(74) Representative: **MacMaster, Alan Jeffrey et al,**
**Swindell & Pearson 44 Friar Gate**
**Derby DE1 1DA(GB)**

(54) **Process and apparatus for the firing of ceramic products.**

(57) A method of firing glazed articles in a continuous kiln in which the temperature of the articles is raised to a firing temperature at which the glaze becomes molten, comprises subjecting the articles to direct heating in the region of the kiln in which they are raised in temperature towards the firing temperature, subjecting the articles to indirect heating in the region of the kiln in which they attain the firing temperature, and directing products of combustion from burners employed to generate the heat in the indirectly heated region into contact with the articles at or before direct heated region to preheat the articles.

EP 0 237 334 A2

Process and Apparatus

for the Firing of Ceramic Products

0237334

This invention relates to a process and apparatus
for the firing of ceramic products and is especially
applicable to the firing of products in continuous kilns.

In the continuous firing of ceramic products such as
ceramic tiles the products are moved through a kiln in the
course of which their temperature is raised to a
predetermined firing temperature which is maintained for a
sufficient period of time to bring about the desired
firing of the ware, following which the products leave the
kiln and are gradually cooled. Traditionally such kilns
are fired by open flame burners so that the products of
combustion of the burners enter directly into the kiln and
impinge upon the products being fired. While this is
acceptable in some instances problems arise in the case of
glazed ware where, particularly towards the outlet end of
the kiln where the glaze is molten, it is susceptible to
damage or contamination by the products of combustion
which are traditionally extracted from such kilns by
movement over the ware towards the inlet end. The flow of
combustion products over the surface of the glazed ware
can cause rippling or other formations on the surface of
the glaze and "dryness", for example lack of gloss, and
interferes with the otherwise still atmosphere containing glaze volatiles in the main firing zone of the kiln which is conducive to the formation of high gloss surfaces on the finished glazed ware.

Certain of these problems can be alleviated by the employment of indirect firing, that is to say by transmitting heat to the ware in the kiln indirectly through some element which is heated by burners but transmits the heat to the ware by radiation or other indirect means. However such techniques substantially reduce the proportion of generated heat actually transmitted to the ware and hitherto this reduction in efficiency has offset the benefits of indirect compared with direct or open flame heating.

It is an object of the present invention to provide a method and apparatus whereby the benefits of indirect heating may be secured with less loss of efficiency than hitherto.

The invention provides a method of firing articles in a continuous kiln comprising subjecting the articles to indirect heating, extracting products of combustion from the burners employed to generate the heat and introducing these products of combustion into contact with the articles at an earlier stage of passage through the kiln to pre-heat the articles.

Preferably the articles are subjected to indirect heating throughout or for most of the time during which they are maintained at or about their predetermined firing temperature. Preferably in regions of the kiln prior to those at which the articles have attained their firing temperature the articles are subjected to direct heating and heating by said products of combustion.

The invention also provides a method of firing glazed articles in a continuous kiln in which the temperature of the articles is raised to a firing temperature at which the glaze becomes molten, the method comprising subjecting the articles to direct heating in the region of the kiln in which they are raised in temperature towards the firing temperature, subjecting the articles to indirect heating in the region of the kiln in which they attain the firing temperature, and directing products of combustion from burners employed to generate the heat in the indirectly heated region into contact with the articles at or before said direct heated region to pre-heat the articles.

The recirculated products of combustion may be introduced into contact with the articles at one or more earlier stages during passage of the articles through the

- 4 -                                                    0237334

kiln. Advantageously they are introduced towards the point of entry of the articles to the kiln in order to preheat essentially cool articles. Some or all of the recirculated combustion products may however be introduced into contact with the articles at a stage after they have entered the kiln and have been raised in temperature to some extent.

Advantageously at least some of the recirculated combustion products are introduced beneath the support on which the articles are transported through the kiln in order to increase the temperature of the undersides of the articles which are generally insulated to some extent by the support on which they are carried.

The invention also provides a continuous kiln for the firing of ceramic articles comprising a generally closed housing having an inlet and an outlet, conveyor means movable through the housing to transport articles to be fired therethrough from said inlet to said outlet, indirect heating means for raising the temperature at the outlet end of said housing to a predetermined desired temperature, and means for directing products of combustion from said heating means into said housing at a zone thereof nearer to said inlet end.

The invention further provides a continuous kiln for the firing of glazed ceramic articles by raising them to a firing temperature at which the glaze becomes molten, the kiln comprising a generally closed chamber having an inlet and an outlet, and divided into a heating zone in which the temperature of the articles is raised to said firing temperature and a firing zone in which the articles are maintained at said firing temperature, conveyor means movable through the chamber to transport articles to be fired therethrough from said inlet through said heating and firing zones to said outlet, direct heating means in said heating zone, indirect heating means in said firing zone, and means for directing products of combustion from said indirect heating means into said chamber at or before said heating zone to pre-heat the articles.

Said means for directing said products of combustion into said chamber preferably comprises duct means communicating with said chamber towards the inlet end thereof and incorporating a fan or blower to move the combustion products therethrough. A plurality of duct means controllable by individual closure members may be provided whereby to enable introduction of recirculated combustion products into a number of regions of the kiln alternatively or simultaneously. If desired some of said duct means may be arranged to open into said chamber beneath instead of above said conveyor means whereby to apply heat to the underside of the articles.

Said indirect heating means may advantageously comprise a ceramic tube burner or burners in which heat generated by the burner is employed to heat a tubular ceramic member mounted within the chamber from which heat is radiated to the articles.

Preferably baffle means is provided to separate said heating zone from said firing zone to minimize air or gas flow therebetween while permitting passage of articles therebetween.

Preferably also further baffle means is provided to divide the chamber into sections each provided with temperature sensing and control means whereby the temperatures within individual sections may be controlled independently of other sections.

The means for transporting articles through the kiln may advantageously comprise a series of ceramic rollers which directly support the articles to be fired.

An embodiment of the invention will now be described, by way of example only, with reference to the accompanying diagrammatic drawings in which :


Fig. 1 is a longitudinal cross-section through a continuous kiln according to the invention;


Fig. 2 is a transverse cross-section through the kiln of Fig. 1;  and


Fig. 3 is a graph illustrating the temperature attained by ceramic articles passing through the kiln at different regions of its travel.


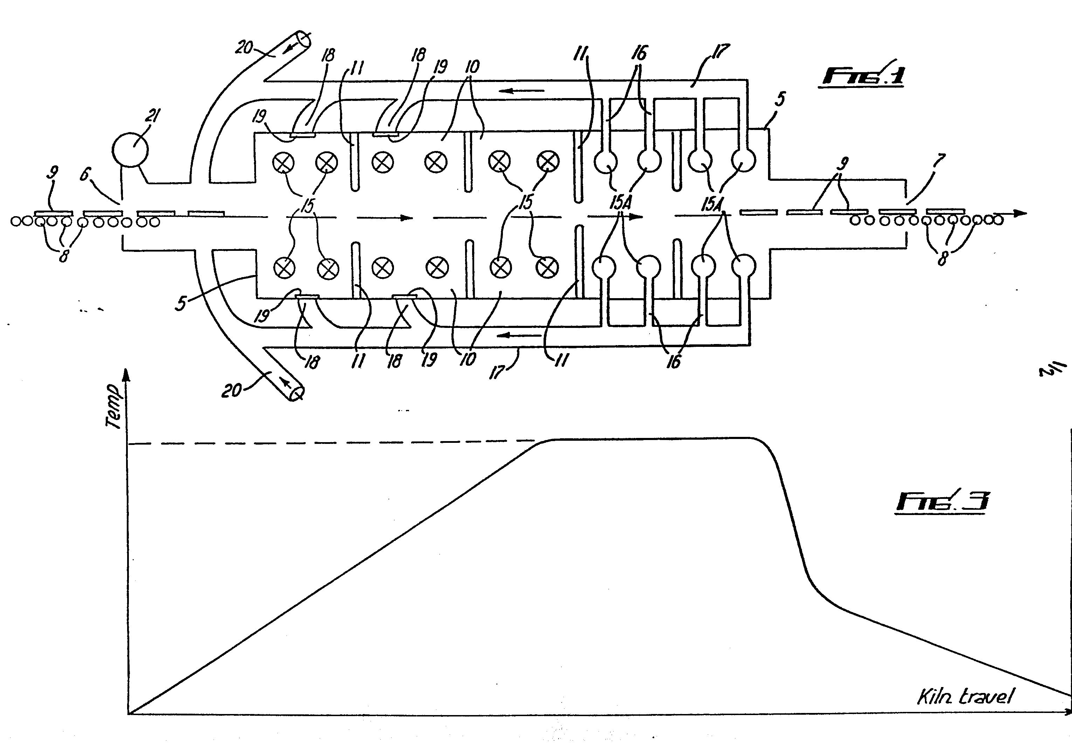

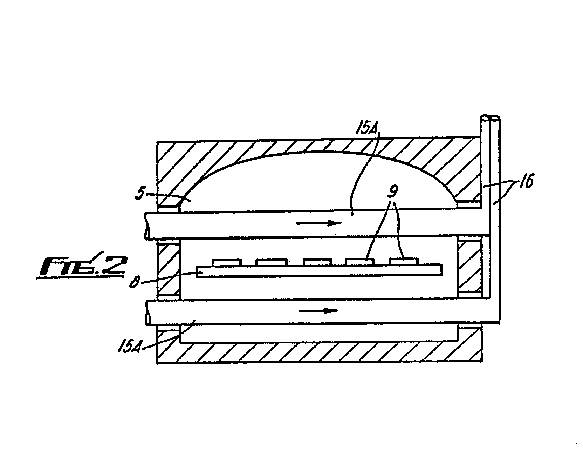

Referring to the drawings there is shown in Figs. 1 and 2 a single layer roller kiln suitable for use in the firing of glazed ceramic tiles and comprising a generally closed chamber 5 having an inlet 6 and an outlet 7.  A conveyor comprising a series of transverse ceramic rollers 8 extends through the kiln chamber from the inlet to the outlet and tiles 9 to be fired are directly supported on the rollers and traversed through the kiln by rotation of the rollers.


The kiln chamber is divided into a series of sections 10 separated by adjustable baffle members 11 disposed above and below the conveyor, the baffle members being movable to and from the conveyor in order to vary

the distance between them and hence control flow of air and combustion products from one region of the kiln to another.

A series of burners 15 is mounted within each section 7 of the kiln, there being in the illustrated example two burners above and two below the conveyor in each section. In the first three sections of the kiln which constitute a heating zone, the burners are of the open flame or direct type in which the burner flames enter the chamber and the heat generated together with the combustion products impinges upon the tiles carried on the conveyor to raise their temperature. In the two subsequent sections of the kiln indirect burners 15A are employed, there again being two burners mounted above and two below the conveyor in each section in the illustrated example. These burners are of the ceramic tube type in which the heat from the burner is employed to raise the temperature of a ceramic tube and is then radiated from the tube into the kiln chamber.

The products of combustion from the burners 15A do not enter the kiln chamber but pass through flue ducts 16 into common recirculation ducts 17 which extend back along the kiln and are connected to a plurality of inlet openings 18 towards the inlet end of the kiln. Each of the inlet openings is controlled by a closure member or damper 19 enabling combustion products to be introduced into the heating zone of the kiln at one or more such openings as desired. In this way the heat from the combustion products is employed to preheat the tiles entering the kiln and thereby reduce the heat which requires to be applied to raise the tiles to the desired firing temperature.

Advantageously means is provided in the recirculation ducts for sensing the temperature of the combustion products flowing through the duct, the closure members 19 being opened or closed in accordance with the temperature sensed to ensure that the products enter the kiln at a suitable region. Air inlet ducts 20 are provided to enable introduction of external air into the combustion products under control of valve means (not shown) in the event they are at too high a temperature by the time they reach the final inlet to the kiln chamber. In the event of the combustion products being at lower temperatures they are introduced into the kiln chamber at points progressively further inwards from the inlet end in order that they produce a desired preheating of the tiles and do not have a cooling effect or overheat the tiles both of which would be undesirable.

While in the drawings the recirculation ducts are illustrated diagrammatically as entering above and below the conveyor, the ducts may be arranged such that they all enter below the conveyor in order to increase the heat applied to the underside of the tiles which are shielded to a considerable degree by the rollers on which they are transported through the kilns. In this way more uniform heating of the tiles can be attained. The ducts may alternatively be arranged to enter the kiln chamber above the conveyor or some ducts may enter above and others below.

Fig. 3 of the drawings is a graph showing the temperature attained by the tiles at different points during their passage through the kiln. It will be seen that the temperature rises generally uniformly in the heating zone until the desired firing temperature is attained, following which the tiles are maintained at the firing temperature in the firing zone until the point at which they leave the kiln and commence to cool. As can be seen by comparison of Figs. 1 and 3 the kiln is arranged such that in the heating zone during which the tiles are rising to their desired firing temperature they are subjected to direct heating from the open flame burners 15 but in the firing zone during which they are maintained at the firing temperature they are indirectly heated using the ceramic tube burners 15A.

In order to withdraw combustion products from the heating section of the kiln which is direct heated, fan means 21 is provided to draw the products towards the inlet end of the kiln from which they are discharged to atmosphere. The movement of the combustion products over the surface of the tiles in this region is not detrimental since the glaze on the tiles is not molten and not therefore susceptible to rippling or other damage or to contamination. It is desirable however to minimise air or gas movement over the surface of the tiles in the firing zone of the kiln which is indirectly heated and particularly towards the outlet end of the firing zone where the glaze has liquified and is more susceptible to contamination and damage. The extractor fan 21 is accordingly arranged to apply extraction only over the heating zone of the kiln which is direct fired, the baffles 11 between the direct and indirect fired heating and firing zones of the kiln being closed substantially in order to minimise flow from the firing zone towards the inlet end. In this way gas or air movement over the surface of the tiles in the critical high temperature stages where the glaze is molten is minimised and the kiln atmosphere maintained in a condition which facilitates the attainment of high quality glaze finishes.

Thus in operation of the kiln, tiles to be fired are introduced at the inlet end and transported on the conveyor through the various sections of the kiln to the outlet end where they are discharged. On entering the kiln the tiles are subjected to preheating by the combustion products derived from the indirectly heated region of the kiln. The tiles are then direct fired in the initial heating zone of the kiln during which they rise in temperature to the firing temperature. When the firing temperature at which the glaze becomes molten is attained the tiles enter the main firing zone of the kiln which is indirectly fired so that combustion products do not impinge upon the surface of the tiles and flow of air or gas over the surface is minimised. Products of combustion are extracted from the direct fired region of the kiln through the inlet end but movement of the kiln atmosphere in the high temperature firing zone is minimised by closing of the baffles between the heating and firing zones and arranging for the effect of the extraction fan to be minimal in the firing zone.

Control of preheating is effected by sensing the temperature of the recirculated combustion products and introducing them through appropriate ones of the inlet apertures 18 under control of their closure plates or baffles 19 dependent on the sensed temperature of the combustion products.  Where the products remain at too
high a temperature by the time they have reached the final
inlet aperture 18, cool air may be introduced from atmosphere through ducts 20 under valve control to reduce the
temperature of the combustion products to a suitable
level.

By virtue of the arrangement described all the heat
of the products of combustion of the indirectly fired
stages of the kiln is employed in preheating products
at earlier stages of passage through the kiln thereby
increasing the thermal efficiency of the overall firing
cycle.  By employment of direct firing at the preliminary
heating end of the kiln and indirect firing in the later
stages the loss of efficiency in the latter region is
compensated by the greater efficiency of the direct fired
heating region.  The overall efficiency is also improved
by recirculation of the combustion products of the
indirectly fired region.  In addition by minimising air or
gas movement, conditions within the high temperature
firing zone of the kiln are maintained in such a way as to
minimise contamination or damage to the glazed surfaces of
the products.

Various modifications may be made without departing
from the invention.  For example the means for transporting articles through the kiln and the arrangements of baffles for dividing the kiln into separate temperature controlled sections may be altered as desired. Moreover while reference has been made primarily to roller kilns for use in the firing of ceramic tiles, the invention may be applied to continuous kilns of other types for use with a wide variety of different products, for example tunnel kilns used in the firing of ceramic tableware or other articles.

Whilst endeavouring in the foregoing Specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## CLAIMS

1.  A method of firing articles in a continuous kiln comprising subjecting the articles to indirect heating, extracting products of combustion from the burners employed to generate the heat and introducing these products of combustion into contact with the articles at an earlier stage of passage through the kiln to pre-heat the articles.

2.  A method according to claim 1 characterised in that the articles are subjected to indirect heating throughout or for most of the time during which they are maintained at or about their predetermined firing temperature.

3.  A method according to claim 2 characterised in that in regions of the kiln prior to those at which the articles have attained their firing temperature the articles are subjected to direct heating and heating by said products of combustion.

4.  A method of firing glazed articles in a continuous kiln in which the temperature of the articles is raised to a firing temperature at which the glaze becomes molten, characterised in that the method comprises subjecting the articles to direct heating in the region of the kiln in which they are raised in temperature towards the firing temperature, subjecting the articles to indirect heating in the region of the kiln in which they attain the firing temperature, and directing products of combustion from burners employed to generate the heat in the indirectly heated region into contact with the articles at or before said direct heated region to preheat the articles.

5.    A method according to any preceding claim characterised in that said products of combustion are directed on to the articles towards their point of entry into the kiln to preheat essentially cool articles.

6.    A method according to any preceding claim characterised in that said products of combustion are directed on to the articles after they have entered the kiln and have been raised in temperature to some extent.

7.    A method according to any preceding claim characterised in that at least some of said products of combustion are introduced beneath the articles.

8.    A method according to any preceding claim characterised in that cool air is mixed with said combustion products before they are directed on to the articles.

9.    A method according to any preceding claim characterised in that said combustion products are constrained to flow over said articles in a direction opposite to the direction of movement of the articles through the kiln.

10.   A method according to claim 9 characterised in that flow of said combustion products over the articles is controlled to minimize disturbance of air in said region of the kiln in which the articles are indirectly heated.

11.   A continuous kiln for the firing of ceramic articles comprising a generally closed housing having an inlet and an outlet, conveyor means movable through the housing to transport articles to be fired therethrough from said inlet to said outlet, indirect heating means for raising the temperature at the outlet end of said housing to a predetermined desired temperature, and means for directing products of combustion from said heating means into said housing at a zone thereof nearer to said inlet end.

12.   A kiln according to claim 11 characterised in that said indirect heating means is confined to the region of said kiln within which the articles are maintained at their predetermined firing temperature, direct heating means being employed at those regions of the kiln nearer to said inlet.

13.    A continuous kiln for the firing of glazed ceramic articles by raising them to a firing temperature at which the glaze becomes molten, the kiln comprising a generally closed chamber having an inlet and an outlet, characterised in that said chamber is divided into a heating zone in which the temperature of the articles is raised to said firing temperature and a firing zone in which the articles are fired at said firing temperature, conveyor means is provided which is movable through the chamber to transport articles to be fired therethrough from said inlet through said heating and firing zones to said outlet, direct heating means is provided in said heating zone, indirect heating means is provided in said firing zone, and means is provided for directing products of combustion from said indirect heating means into said chamber at or before said heating zone to pre-heat the articles.

14.    A kiln according to any of claims 11 to 13 characterised in that said means for directing said products of combustion into said chamber comprises duct means communicating with said chamber towards the inlet end thereof and incorporating a fan or blower to move the combustion products therethrough.

15. A kiln according to claim 14 characterised by a plurality of duct means communicating with different regions of said chamber and provided with individually controllable closure members whereby to enable introduction of recirculated combustion products into a number of regions of the kiln alternatively or simultaneously.

16. A kiln according to claim 14 or 15 characterised by means for mixing external air with said combustion products to reduce the temperature thereof.

17. A kiln according to claim 15 or 16 characterised by control means operable to sense the temperature of the combustion products in each of said duct means, and operatively connected to the associated closure member whereby to open and close same when the combustion products attain predetermined temperatures.

18. A kiln according to any of claims 14 to 17 characterised in that said duct means is arranged to open into said chamber both above and beneath said conveyor means.

19.   A kiln according to any of claims 13 to 18 characterised by baffle means separating said heating zone from said firing zone whereby to minimize air or gas flow therebetween while permitting passage of articles therebetween.

20.   A kiln according to any of claims 11 to 19 characterised by fan means operable to withdraw combustion products towards the inlet end of the kiln and discharge them to atmosphere.

21.   A kiln according to claim 20 characterised by control means for said fan operable to limit extraction to the direct fired heating zone of the kiln.

22.   A kiln according to any of claims 11 to 21 characterised in that baffle means is provided to divide the chamber into sections each provided with temperature sensing and control means whereby the temperatures within individual sections may be controlled independently of other sections.

23.   A kiln according to claim 22 characterised in that said baffle means are adjustable towards and away from said means for transporting the articles.

24.    A kiln according to any of claims 11 to 23 characterised in that said means for transporting articles through the kiln comprises a series of ceramic rollers which directly support the articles to be fired.

25.    A kiln according to any of claims 11 to 24 characterised in that said indirect heating means comprises a ceramic tube burner or burners in which heat generated by the burner is employed to heat a tubular ceramic member mounted within the chamber from which heat is radiated to the articles.

FIG.1

FIG.3

Temp

Kiln travel

0237334

1/2

*FIG.2*